# EUROPÄISCHE PATENTSCHRIFT

(11) **EP 3 504 453 B1**
(45) Veröffentlichungstag und Bekanntmachung des Hinweises auf die Patenterteilung: **06.10.2021**
(21) Anmeldenummer: 17764324.4
(22) Anmeldetag: 21.08.2017
(51) Int. Cl.: F16D 13/08, F16D 41/04, F16D 41/20, F16D 41/02, F16H 25/22

(54) **DOPPELSCHLINGFEDER, ROTATIONSEINRICHTUNG UND ZU AKTUIERENDES SYSTEM**
DOUBLE WRAP SPRING, ROTATION DEVICE AND SYSTEM TO BE ACTUATED
DOUBLE RESSORT ENROULÉ, DISPOSITIF DE ROTATION ET SYSTÈME DEVANT ÊTRE ACTIONNÉ

(30) Priorität: 23.08.2016 DE 102016215822
(43) Veröffentlichungstag der Anmeldung: 03.07.2019
(73) Patentinhaber: Schaeffler Technologies AG & Co. KG, 91074 Herzogenaurach (DE)
(72) Erfinder: SCHUMANN, Lars, 77815 Bühl (DE); MÁN, Lászlo, 77833 Ottersweier-Unzhurst (DE)
(86) Internationale Anmeldenummer: PCT/DE2017/100697
(87) Internationale Veröffentlichungsnummer: WO 2018/036589

(56) Entgegenhaltungen:
- WO-A2-2015/048961
- DE-A1-102015 220 680
- DE-A1-102015 220 920
- Anonymous: "GREENSTAR 6439 Druckfeder Launcher anpassbar für Echo: Amazon.de: Baumarkt", , 7. Oktober 2015 (2015-10-07), XP055426854, Gefunden im Internet: URL:https://www.amazon.de/GREENSTAR-6439-D ruckfeder-Launcher-anpassbar-Echo/dp/B00TN 57ZVA [gefunden am 2017-11-20]

## Beschreibung

Die vorliegende Erfindung betrifft eine Doppelschlingfeder mit einem inneren Wicklungsbereich und ein diesbezüglich radial außen angeordneten äußeren Wicklungsbereich. Des Weiteren betrifft die vorliegende Erfindung eine Rotationseinrichtung mit der erfindungsgemäßen Doppelschlingfeder, sowie ein zu aktuierendes System, insbesondere eine Kupplungseinrichtung, welches bzw. welche die erfindungsgemäße Rotationseinrichtung umfasst.

Zur Betätigung von Kupplungen muss üblicherweise ein translatorischer Weg zurückgelegt werden, um Kupplungshälften voneinander zu trennen oder sie miteinander in Eingriff zu bringen. Zu diesem Zweck werden Betätigungseinrichtungen benötigt, die auch Aktoren genannt werden, und mit denen eine benötigte Kraft über einem entsprechenden Weg erzeugbar ist. Es existieren zu diesem Zweck Aktoren, die die Drehbewegung eines Bauteiles in eine Axialbewegung eines weiteren Bauteiles umwandeln, z.B. um eine Kupplung zu öffnen oder zu schließen. Typische Aktoren sind hydraulische Nehmerzylinder, oder auch Planetenwälzgewindespindeltriebe (PWG). Planetenwälzgewindespindeltriebe umfassen eine Spindel, einer Spindelmutter und zwischen diesen über den Umfang angeordnete, in einem Planetenträger aufgenommene Planetenwälzkörpern. Eine der Komponenten - Spindel oder Spindelmutter - sind drehangetrieben und die andere Komponente ist bei drehfester Anordnung längs der Längsachse der Spindel um einen der eingestellten Übersetzung entsprechenden Axialweg verlagerbar. Bei beispielsweise mittels eines Elektromotors angetriebenen wirkungsgradoptimierten Spindeltrieben wie z.B. Planetenwälzgewindespindeltrieben und insbesondere in Aktoren, wie hydrostatischen Kupplungsaktoren, die gegen eine Last, die durch eine Kupplungskennlinie abbildbar ist, arbeiten, ist bei einem erforderlichen Halten einer Position ein Haltestrom und somit ein Haltemoment im Elektromotor erforderlich. Bei einem Planetenwälzgewindespindeltrieb ist dies darin begründet, dass dieser keine Selbsthemmung aufweist. Das bedeutet jedoch, dass bei Stromausfall oder mangelnder Stromversorgung die Soll-Position des Aktors nicht gehalten werden kann, so dass die Gefahr besteht, dass die Kupplung unkontrollierbar betätigt wird.

Um dies zu vermeiden, hat sich der Einsatz von Doppelschlingfedern etabliert. Derartige Doppelschlingfedern umfassen zwei Wicklungsbereiche, die mit jeweils anderen, zueinander rotatorisch bewegbaren Bauteilen reibschlüssig zusammenwirken können.

Doppelschlingfedern haben einen inneren Wicklungsbereich und einen äußeren Wicklungsbereich, wobei in einer radial ineinander verschachtelten Ausführungsform der Doppelschlingfeder die Drehrichtrung des schraubengangförmigen inneren Wicklungsbereiches und des äußeren Wicklungsbereiches entgegengesetzt sind, so dass im nicht-montierten Zustand der Doppelschlingfeder bei Einleitung eines Drehmoments in den inneren Wicklungsbereich in einer ersten Drehrichtung der innere Wicklungsbereich und der äußere Wicklungsbereich in ihren radialen Erstreckungen aufgeweitet werden, und bei Drehrichtungsumkehr in eine zweite Drehrichtung der innere Wicklungsbereich und der äußere Wicklungsbereich in ihren radialen Erstreckungen verringert werden.

Doppelschlingfedern können dabei ineinander verschachtelte Wicklungsbereiche unterschiedlichen Durchmessers haben, oder axial hintereinander angeordnete Wicklungsbereiche unterschiedlichen Durchmessers haben, die jeweils über einen Übergangsbereich miteinander verbunden sind.

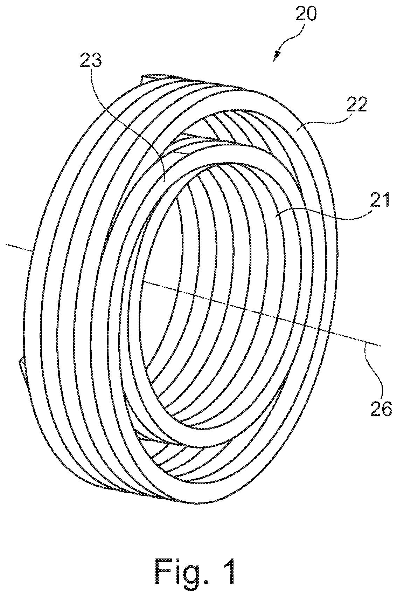

Eine derartige herkömmliche Doppelschlingfeder ist in Figur 1 dargestellt.

Im montierten Zustand der Doppelschlingfeder, in dem der innere Wicklungsbereich auf Welle sitzt und der äußere Wicklungsbereich an der Innenseite eines Hohlzylinder anliegt, wird bei Einleitung eines Drehmoments in einer ersten Drehrichtung der von dem inneren Wicklungsbereich auf die Welle aufgebrachte, radial wirkende Druck verringert. Der von dem äußeren Wicklungsbereich auf den Hohlzylinder aufgebrachte, radial wirkende Druck wird vergrößert. Bei einer Drehrichtungsumkehr in eine zweite Drehrichtung wird der radial wirkende, vom inneren Wicklungsbereich aufgebrachter Druck auf die Welle vergrößert, und der radial wirkende, vom äußeren Wicklungsbereich auf den Hohlzylinder aufgebrachte Druck verringert.

Auch aus der DE 10 2015 220 920 A1 ist eine derartige Doppelschlingfeder bekannt, bei der ein innerer Wicklungsbereich innerhalb des vom äußeren Wicklungsbereich definierten Raumes koaxial angeordnet ist. Hierbei sind der innere Wicklungsbereich und der äußere Wicklungsbereich einteilig ausgebildet.

Die DE 10 2015 217 164 A1 offenbart eine derartige Doppelschlingfeder, die einen inneren Wicklungsbereich sowie einen äußeren Wicklungsbereich aufweist, wobei der äußere Wicklungsbereich den inneren Wicklungsbereich auf dessen radialer Außenseite umgibt. Die beiden Wicklungsbereiche sind über ein Verbindungstück miteinander mechanisch verbunden.

Anonymous: "GREENSTAR 6439 Druckfeder Launcher anpassbar für Echo: Amazon.de: Baumarkt",, XP055426854, zeigt eine Seilzugstarter Feder, wie sie allgemein z.B. für Rasenmäher bekannt ist.

Die noch nicht veröffentlichte DE 10 2016 214 711 A1 beschreibt eine Doppelschlingfeder, die eine Stützungseinrichtung aufweist, mit welcher eine Verformung des Übergangsbereiches blockierbar oder blockiert ist, wenn ein Torsionsmoment auf die Doppelschlingfeder wirkt.

Eine solche Doppelschlingfeder sowie eine die Doppelschlingfeder aufnehmende Rotationseinrichtung sind in den Figuren 1 bis 5 dargestellt.

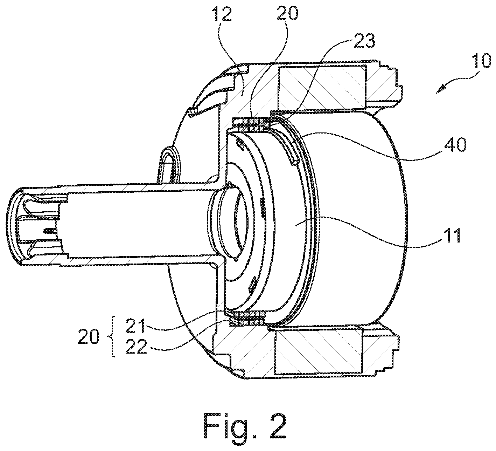

Figur 1 zeigt eine herkömmliche Doppelschlingfeder, die einen inneren Wicklungsbereich 21 sowie einen äußeren Wicklungsbereich 22 umfasst, wobei der innere Wicklungsbereich 21 radial innerhalb des äußeren Wicklungsbereichs 22 angeordnet ist, sodass die beiden Wicklungsbereiche 21, 22 ineinander verschachtelt sind. Der innere Wicklungsbereich 21 ist über einen Übergangsbereich 23 an den äußeren Wicklungsbereich 22 angeschlossen. Der innere Wicklungsbereich 21 und der äußere Wicklungsbereich 22 sind dabei koaxial zu einer gemeinsamen Rotationsachse 26 angeordnet. Die bestimmungsgemäße Anordnung der Doppelschlingfeder 20 in einer Rotationseinrichtung 10 ist in Figur 2 dargestellt. Hier ist ersichtlich, dass die Rotationseinrichtung 10 eine Welle 11 aufweist sowie eine diesbezüglich angeordnete Nabe 12, wobei sich die Doppelschlingfeder 20 mit dem inneren Wicklungsbereich 21 auf der Außenseite der Welle 11 abstützt und mit dem äußeren Wicklungsbereich 22 an der Innenseite der Nabe 12 abstützt. Ersichtlich ist dabei ebenfalls der Übergangsbereich 23, der den inneren Wicklungsbereich mit dem äußeren Wicklungsbereich mechanisch verbindet. Zur Stützung des Übergangsbereichs 23 ist in der in Figur 2 dargestellten Ausführungsform eine Stützeinrichtung 40 angeordnet, um die Übertragung eines Drehmoments vom äußeren Wicklungsbereich 22 auf den inneren Wicklungsbereich 21 bzw. umgekehrt verlustarm zu realisieren.

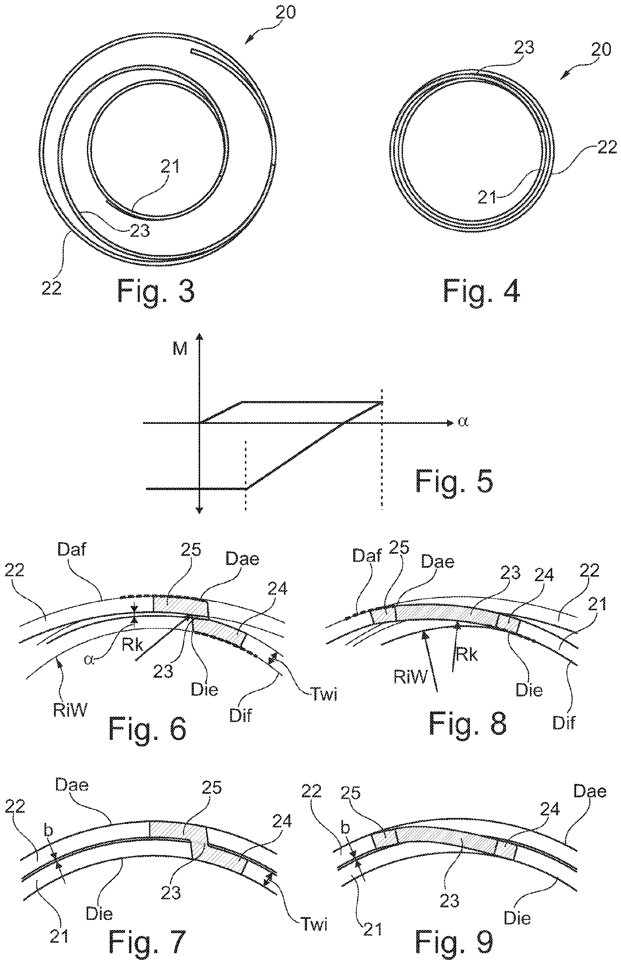

Eine derartige herkömmliche Doppelschlingfeder 20 ist auch in den Figuren 3 und 4 in Draufsicht erkennbar.

Figur 3 zeigt dabei die Doppelschlingfeder 20 im nicht montierten Zustand, sodass der innere Wicklungsbereich 21 einen relativ kleinen Durchmesser aufweist und der äußere Wicklungsbereich 22 einen relativ großen Durchmesser aufweist. Figur 4 zeigt die Doppelschlingfeder im montierten Zustand, wobei ersichtlich ist, dass sich der Durchmesser des äußeren Wicklungsbereichs 22 wesentlich verringert hat und der Durchmesser des inneren Wicklungsbereichs 21 wesentlich vergrößert hat, sodass die Wicklungsbereiche 21, 22 wie zu Figur 2 beschrieben, mit einer Pressung auf der Welle 11 bzw. in der Nabe 12 montiert sind.

In Figur 5 ist ein das Verhalten einer herkömmlichen Doppelschlingfeder darstellendes Drehmoment-Verdrehwinkel-Diagramm ersichtlich, wobei erkennbar ist, dass bei einer Drehrichtungsumkehr im Punkt des maximalen Verdrehwinkels das übertragbare Drehmoment relativ geringfügig ansteigt, um wiederum erst nach Einstellung eines relativ großen Verdrehwinkels ein Maximum zu erreichen.

Das heißt, es erfolgt bei einer Umkehrung der Drehrichtung im Drehrichtungsumkehrpunkt ein nur moderater Anstieg eines mit der Doppelschlingfeder übertragbaren Momentes M aufgrund dessen, dass der Übergangsbereich relativ weitgehend verformbar ist. Bei einer Drehrichtungsumkehr nimmt somit dieser Übergangsbereich erst einmal eingetragene Energie auf, bevor es zu einem Rutschen bzw. zu einer Relativbewegung zwischen Doppelschlingfeder und Nabe kommt.

Nachteilig an den bisher bekannten Ausgestaltungen von Doppelschlingfedern ist es, dass diese entweder mit einem Zusatzbauteil zu realisieren sind und/ oder bei Drehmoment- bzw. Drehrichtungsumkehr auf Grund der dadurch erzeugten Verformungen einzelner Bereiche relativ elastisch auf diese Drehmoment- bzw. Drehrichtungsumkehr reagieren, so dass eine gewünschte, von der Doppelschlingfeder zu realisierende Brems- bzw. Blockierungswirkung erst relativ spät eintritt.

Es hängt von der Übersetzung der Betätigungseinrichtung bzw. des Aktors ab, der die jeweilige Doppelschlingfeder aufweist, ob diese Verzögerung im Ansprechverhalten hinsichtlich der Wirkung auf eine Kupplungseinrichtung noch tolerierbar ist. Aus Gründen der Sicherheit sowie des Fahrkomforts ist jedoch ein sehr schnelles Ansprechverhalten bzw. eine nur sehr geringe Verzögerung bei Drehmoment- bzw. Drehrichtungsumkehr bis zur deutlichen Bremswirkung bzw. Blockierung einer Relativ-Rotationsbewegung zwischen den von der Doppelschlingfeder kontaktierten Bauteilen gewünscht.

Der Erfindung liegt daher die Aufgabe zu Grunde, eine Doppelschlingfeder sowie eine damit ausgestattete Rotationseinrichtung und ein diese umfassende zu aktuierendes System zur Verfügung zu stellen, die gewährleisten, dass bei Realisierung eines auf die Doppelschlingfeder bzw. Rotationseinheit wirkenden Drehmomentes in einer ersten Drehrichtung relativ verlustarm eine Rotationsbewegung erzeugbar ist, und bei Umkehrung der Drehmoment- bzw. Drehrichtung in zuverlässiger und schneller Weise eine Brems- bzw. Blockadewirkung der Rotationseinrichtung herbeiführbar ist.

Diese Aufgabe wird durch die erfindungsgemäße Doppelschlingfeder nach Anspruch 1, die erfindungsgemäße Rotationseinrichtung nach Anspruch 6 sowie durch das erfindungsgemäße zu aktuierende System nach Anspruch 10 gelöst. Vorteilhafte Ausgestaltungen der erfindungsgemäßen Doppelschlingfeder sind in den Unteransprüchen 2-5 angegeben. Vorteilhafte Ausgestaltungen der erfindungsgemäßen Rotationseinrichtung sind in den Unteransprüchen 7-9 und 11 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Gemäß einem ersten Aspekt der Erfindung wird eine Doppelschlingfeder zur Verfügung gestellt, die einen schraubengangförmigen inneren Wicklungsbereich und einen schraubengangförmigen äußeren Wicklungsbereich sowie einen den schraubengangförmigen inneren Wicklungsbereich mit dem schraubengangförmigen äußeren Wicklungsbereich mechanisch verbindenden Übergangsbereich aufweist. Es ist erfindungsgemäß vorgesehen, dass die Doppelschlingfeder im entspannten, nicht eingebauten Zustand derartig ausgeführt ist, dass die beiden Wicklungsbereiche exzentrisch zueinander angeordnet sind. Das bedeutet, dass die Längs- bzw. Rotationsachsen der beiden Wicklungsbereiche zueinander parallel, aber beabstandet sind. Vorzugsweise ist dabei der innere Wicklungsbereich zumindest abschnittsweise und ggf. vollständig innerhalb des radial äußeren Wicklungsbereiches angeordnet. Die Erfindung ist jedoch nicht auf eine derartige radiale Verschachtelung der Wicklungsbereiche eingeschränkt, sondern die erfindungsgemäße Doppelschlingfeder kann auch derart ausgestaltet sein, dass die beiden Wicklungsbereich in axialer Reihenanordnung aneinander angeschlossen sind.

Die Bezeichnungen "innerer Wicklungsbereich" und "äußerer Wicklungsbereich" sind dabei insbesondere auf eine in sich verschachtelte Doppelschlingfeder bezogen, bei der der innere Wicklungsbereich zumindest abschnittsweise vom äußeren Wicklungsbereich umgeben ist. Im Fall von axial hintereinander angeordneten Wicklungsbereichen ist der innere Wicklungsbereich der Wicklungsbereich mit dem kleineren Durchmesser und der äußere Wicklungsbereich der Wicklungsbereich mit dem größeren Durchmesser.

Durch die Exzentrizität der Wicklungsbereiche zueinander besteht ein minimaler Abstand a in dem Sektor der Anordnung des Übergangsbereiches, der im Verhältnis zur Dicke des Wicklungsmaterials TWi, aus dem der innere Wicklungsbereich gefertigt ist, beträgt: 0 bis 3 TWi. In einer bevorzugten Ausgestaltung gilt für den Abstand a: 0≤a≤TWi.

Eine dabei realisierte Exzentrizität E der Längsachsen des inneren Wicklungsbereiches und des äußeren Wicklungsbereiches sollte sich zum Radius des inneren Wicklungsbereiches RiW im folgenden Verhältnis befinden:
RiW/E = 1,5 bis 4.

Der Radius des inneren Wicklungsbereiches RiW ist dabei zum radial inneren Bereich des inneren Wicklungsbereiches zu messen.

Demzufolge besteht eine klar erkennbare Exzentrizität der beiden Wicklungsbereiche zueinander, um im eingebauten Zustand der Doppelschlingfeder den Abstand zwischen dem inneren Wicklungsbereich und dem äußeren Wicklungsbereich im Bereich des Überganges zwischen den Wicklungsbereichen gering zu halten, so dass dieser Übergangsbereich eine hohe Knick- bzw. Biegefestigkeit aufweist und demzufolge optimal ausgestaltet ist, um ein Drehmoment zwischen den Wicklungsbereichen zu übertragen.

Die erfindungsgemäße Doppelschlingfeder ist dazu ausgestaltet, im eingebauten Zustand mit einem Torsionsmoment um die gemeinsame Rotationsachse des inneren Wicklungsbereichs und des äußeren Wicklungsbereichs belastet zu werden. Dieses Torsionsmoment wirkt zum Beispiel bei der Mitnahme des inneren Wicklungsbereichs und/oder des äußeren Wicklungsbereichs aufgrund von Reibkräften zwischen dem inneren Wicklungsbereich und einer Welle bzw. aufgrund von Reibkräften zwischen dem äußeren Wicklungsbereich der Innenseite eines am äußeren Wicklungsbereich radial außen anliegenden Hohlzylinders.

Der innere Wicklungsbereich und der äußere Wicklungsbereich sowie der Übergangsbereich sind vorzugsweise integrale Bestandteile der Doppelschlingfeder. Das bedeutet, dass die Doppelschlingfeder im Wesentlichen aus einem Draht einteilig ausgeführt ist. Mit dem Übergangsbereich ist ein Torsionsmoment von dem äußeren Wicklungsbereich auf den inneren Wicklungsbereich und umgekehrt übertragbar. Wie bereits bezüglich des Standes der Technik beschrieben, kann auch die erfindungsgemäße Doppelschlingfeder radial einen Druck auf eine innerhalb des inneren Wicklungsbereichs angeordnete Welle ausüben, sowie radial einen Druck auf die Innenseite eines Hohlzylinders ausüben, an dem der äußere Wicklungsbereich anliegt. Somit kann durch Relativ-Rotationsbewegung der an den Wicklungsbereichen anliegenden Bauteile in der einen Drehrichtung eine geringe Reibung zwischen der Doppelschlingfeder und den anliegenden Bauteilen erzeugt werden, und in der Gegendrehrichtung eine hohe Reibung erzeugt werden, die eine Bremswirkung bzw. Blockadewirkung hervorrufen kann.

Der Vorteil der erfindungsgemäßen Doppelschlingfeder liegt insbesondere darin, dass auf Grund der durch die Exzentrizität bedingten geringen Länge des Übergangsbereiches dieser eine geringere bzw. gar keine Verformung erfährt, wenn er unter Drehrichtungsumkehr mit einem Drehmoment belastet wird. Demzufolge ist der Drehmoment-übertragende Übergangsbereich zwischen dem äußeren Wicklungsbereich und dem inneren Wicklungsbereich im Verhältnis zu herkömmlichen Ausführungsformen starr ausgelegt, so dass dieser Bereich im Wesentlichen keine Energie bei der Drehrichtungsumkehr aufnimmt und demzufolge die in die Doppelschlingfeder eingetragene Energie ohne Verzögerung übertragen wird.

Im Ergebnis wird somit mittels der Doppelschlingfeder eine reibmomentbedingte Bremswirkung sehr schnell und zuverlässig erzeugt.

In einer Ausführungsform der erfindungsgemäßen Doppelschlingfeder ist vorgesehen, dass der Übergangsbereich einen Krümmungsradius Rk aufweist, der mindestens so groß ist wie der Radius des inneren Wicklungsbereiches RiW. Das heißt, dass der Übergangsbereich mit einem relativ großen Radius ausgestaltet ist, der einen sehr sanften Übergang zwischen den Wicklungsbereichen realisiert.

Der Krümmungsradius dient dabei zur Anpassung der Formverläufe des inneren Wicklungsbereiches und des äußeren Wicklungsbereiches aneinander. Der hier definierte Krümmungsradius des Übergangsbereiches ist auf die radial innere Seite des Übergangsbereiches bezogen. Der Vorteil dieser Ausgestaltung liegt insbesondere in der Verhinderung von Spannungsspitzen bei betriebsbedingter Belastung der Doppelschlingfeder.

In einer alternativen Ausgestaltung der Doppelschlingfeder ist vorgesehen, dass der Übergangsbereich einen Krümmungsradius Rk aufweist, der maximal so groß ist wie 1/25 des Radius des inneren Wicklungsbereiches RiW. Diese Ausführungsform der Doppelschlingfeder ist somit durch einen sehr kurzen Übergangsbereich gekennzeichnet, der aufgrund seiner Kürze den Vorteil der sehr steifen Verbindung der Wicklungsbereiche realisiert. Dieser Übergangsbereich ist somit im Wesentlichen als eine Stufe oder ein S-förmiger Verlauf ausgebildet.

Wie bereits erwähnt, kann die erfindungsgemäße Doppelschlingfeder derart ausgebildet sein, dass sich der innere Wicklungsbereich und der äußere Wicklungsbereich radial zumindest abschnittsweise überlagern, oder dass sie axial aneinander angeschlossen sind. In der erstgenannten Variante ist somit die Doppelschlingfeder ineinander verschachtelt, wobei der innere Wicklungsbereich von dem äußeren Wicklungsbereich zumindest abschnittsweise und vorzugsweise vollständig radial umgeben ist. In der zweiten genannten Variante sind der innere Wicklungsbereich und der äußere Wicklungsbereich nicht radial einander überlagernd angeordnet, sondern axial in Reihe miteinander verbunden. In diesem Fall ist der minimale Abstand a zwischen dem inneren Wicklungsbereich und dem äußeren Wicklungsbereich lediglich in radialer Richtung zu messen, also von dem inneren Wicklungsbereich zu einem ideellen Maß in radialer Richtung, welches von der Innenseite des äußeren Wicklungsbereiches realisiert ist.

In beiden genannten Ausführungsformen sind der innere Wicklungsbereich und der äußere Wicklungsbereich über den jeweiligen Übergangsberiech miteinander verbunden.

Des Weiteren kann die erfindungsgemäße Doppelschlingfeder einen zwischen dem inneren Wicklungsbereich und dem äußeren Wicklungsbereich angeordneten Zwischenring umfassen, wobei der Zwischenring eine Dicke S aufweist, die wenigstens so groß ist wie ein minimaler Abstand a des inneren Wicklungsbereiches zum äußeren Wicklungsbereich, der in dem Sektor der Anordnung des Übergangsbereiches besteht. Die Ausführungsform mit Zwischenring ist selbstverständlich nur bei der radial verschachtelten Bauart der Doppelschlingfeder anzuwenden. Das Verhältnis der Dicke S des Zwischenringes zu dem minimalen Abstand a ist derart ausgeführt, dass der Zwischenring zwischen dem inneren Wicklungsbereich und dem äußeren Wicklungsbereich positioniert und dort eingeklemmt werden kann und im montierten Zustand aufgrund der damit verbundenen radialen Verschiebungen des äußeren Wicklungsbereiches und des inneren Wicklungsbereiches zwischen dem inneren Wicklungsbereich und dem äußeren Wicklungsbereich im Wesentlichen ohne Beaufschlagung von radial wirkenden Kräften positioniert ist. Erst bei betriebsbedingter Übertragung eines Drehmomentes mittels der Doppelschlingfeder kommt es zur Anlage des inneren Wicklungsbereiches und des äußeren Wicklungsbereiches an dem Zwischenring. Diese Ausführungsform der Doppelschlingfeder mit Zwischenring ist dann vorteilhaft ausgestaltet, wenn die Dicke S des Zwischenringes mindestens der Dicke TWi des Wicklungsmaterials entspricht, aus dem der innere Wicklungsbereich gefertigt ist. Die Dicke S des Zwischenringes ist dabei radial zu messen.

Ein weiterer Aspekt der Erfindung ist eine Rotationseinrichtung, umfassend eine Welle und eine zumindest abschnittsweise als Hohlzylinder ausgestaltete Nabe sowie zwischen Welle und der Innenseite des Hohlzylinders der Nabe eine erfindungsgemäße Doppelschlingfeder. Der innere Wicklungsbereich der Doppelschlingfeder liegt mit seiner Innenseite an einer Außenseite der Welle an, und der äußere Wicklungsbereich der Doppelschlingfeder liegt mit seiner Außenseite an einer Innenseite des Hohlzylinders der Nabe an, so dass beide Wicklungsbereiche zueinander konzentrisch angeordnet sind und bei einer Rotationsbewegung in einer ersten Drehrichtung der Nabe in Bezug zur Welle der äußere Wicklungsbereich einen radialen Druck auf die Innenseite des Hohlzylinders der Nabe vergrößert, so dass die Rotationsbewegung der Nabe in Bezug zur Welle gebremst oder blockiert wird, und bei Drehrichtungsumkehr in eine zweite Drehrichtung der Nabe in Bezug zur Welle der äußere Wicklungsbereich einen radialen Druck auf die Innenseite des Hohlzylinders der Nabe verringert, so dass die Rotationsbewegung der Nabe in Bezug zur Welle realisierbar ist. Die Welle kann auch die Form eines Zapfens aufweisen.

Die Verringerung des radialen Drucks auf die Innenseite des Hohlzylinders der Nabe tritt dadurch auf, dass der äußere Wicklungsbereich bei Drehrichtungsumkehr in eine zweite Drehrichtung seinen Durchmesser etwas verringert.

Auf Grund entgegengesetzter Wicklungsrichtungen des inneren Wicklungsbereichs und des äußeren Wicklungsbereichs wird bei Drehung in der ersten Drehrichtung auf Grund einer Aufweitung des Durchmessers des inneren Wicklungsbereiches der innere Wicklungsbereich einen radialen Druck auf die Außenseite der Welle verringern.

Bei Drehrichtungsumkehr in eine zweite Drehrichtung der Nabe in Bezug zur Welle wird der innere Wicklungsbereich einen radialen Druck auf die Außenseite der Welle vergrößern.

Die Einleitung der Drehbewegung erfolgt über Reibmomente, die zwischen dem inneren Wicklungsbereich und der Welle bzw. dem äußeren Wicklungsbereich und dem Hohlzylinder wirken. Diese Reibmomente werden erzeugt durch Normalkräfte, mit denen der innere Wicklungsbereich auf die Außenseite der Welle drückt, bzw. mit denen der äußere Wicklungsbereich auf die Innenseite des Hohlzylinders drückt. Vorzugsweise sitzt die Doppelschlingfeder derart in der Rotationseinrichtung, dass die Doppelschlingfeder auch im Ruhezustand und ohne Belastung durch ein Torsionsmoment eine radiale Vorspannung auf die Welle sowie auch auf den Hohlzylinder der Nabe ausübt.

Dies wird erreicht, indem die Doppelschlingfeder im Bereich des inneren Durchmessers des inneren Wicklungsbereiches mit einem Untermaß im Verhältnis zum Außendurchmesser der Welle zur Verfügung gestellt wird, und der äußere Durchmesser des äußern Wicklungsbereiches mit einem Übermaß im Verhältnis zum Innendurchmesser des Hohlzylinders der Nabe ausgeführt wird, und die Doppelschlingfeder dann in den Bauraum zwischen Welle und Hohlzylinder eingesetzt wird.

Wie erwähnt bewirkt auf Grund entgegengesetzter Wicklungsrichtungen des inneren Wicklungsbereiches und des äußeren Wicklungsbereiches bei Drehung in der ersten Drehrichtung der innere Wicklungsbereich eine Verringerung des radialen Drucks auf die Außenseite der Welle, bedingt durch eine Aufweitung des Durchmessers des inneren Wicklungsbereiches.

Dadurch wird ein Schleppmoment auf die Welle bewirkt, welches allerdings sehr gering ist, so dass die Nabe in Bezug zur Welle leichtgängig bewegbar ist.

In dieser Situation schließt der äußere Wicklungsbereich den Drehmomentpfad zur Innenseite des Hohlzylinders der Nabe durch eine Erhöhung des radialen Anpressdrucks auf den Hohlzylinder.

Die Welle bzw. Reibfläche dieser kann Bestandteil eines Rotors, einer Spindel oder eines ähnlichen Bauteils sein, und die Nabe kann insbesondere Bestandteil eines Rotors oder einer Spindelmutter oder ähnlichen Bauteils sein. Insbesondere kann die Welle durch die Spindel eines Planetenwälzgewindespindeltriebes ausgebildet sein, und die Nabe kann ein Bestandteil der Spindelmutter des

Planetenwälzgewindespindeltriebes sein.

Insofern der derart ausgestaltete Planetenwälzgewindespindeltrieb ein Aktor zur Betätigung einer Kupplung ist, kann mittels der erfindungsgemäßen Doppelschlingfeder nunmehr verhindert werden, dass aufgrund einer an der Rotationseinrichtung anliegenden Last eine ungewollte rotatorische Bewegung und damit auch eine ungewollte translatorische Bewegung von Elementen des Planetenwälzgewindespindeltriebs erzeugt wird, indem die Doppelschlingfeder eine rotatorische Relativbewegung zwischen Spindel und Spindelmutter des Planetenwälzgewindespindeltriebs reibschlüssig blockiert.

Dabei ist die vorliegende Erfindung nicht auf die Ausgestaltung der Rotationseinrichtung als Planetenwälzgewindespindeltrieb eingeschränkt, sondern die Doppelschlingfeder kann auch zwischen Stator und Rotor eines Elektromotors oder aber auch zwischen dem Lageraußenring und dem Lagerinnenring eines Wälzlagers angeordnet sein.

Im eingebauten Zustand der Doppelschlingfeder in der erfindungsgemäßen Rotationseinrichtung ist vorzugsweise vorgesehen, dass zwischen dem inneren Wicklungsbereich und dem äußeren Wicklungsbereich eine im Wesentlichen konstanter Abstand b über den Umfang des inneren Wicklungsbereiches besteht, wobei gilt: 0,1TWi ≤ b ≤ 0,7 TWi. TWi ist dabei die Dicke des Wicklungsmaterials, aus dem der innere Wicklungsbereich gefertigt ist. Somit ist der Abstand b im Verhältnis zur Dicke des Wicklungsmaterials relativ klein ausgeführt. Der Abstand b ist dabei zwischen der radial äußeren Seite des inneren Wicklungsbereiches und der radial inneren Seite des äußeren Wicklungsbereiches definiert.

Bei einer erfindungsgemäßen Rotationseinrichtung mit einer Doppelschlingfeder, die einen Zwischenring aufweist, ist die Doppelschlingfeder derart ausgestaltet bzw. von der Rotationseinrichtung aufgenommen, dass der innere Wicklungsbereich der Doppelschlingfeder mit seiner radial äußeren Seite radial beabstandet zur Innenseite des Zwischenringes positioniert ist und der äußere Wicklungsbereich mit seiner radial inneren Seite radial beabstandet zur Außenseite des Zwischenringes positioniert ist. Demzufolge ist hier der Abstand b größer als die Dicke S des Zwischenringes.

In weiterer vorteilhafter Ausgestaltung der erfindungsgemäßen Rotationseinrichtung ist vorgesehen, dass in der Doppelschlingfeder zwischen dem Übergangsbereich und dem inneren Wicklungsbereich ein erster Anschlussbereich ausgebildet ist und zwischen dem Übergangsbereich und dem äußeren Wicklungsbereich ein zweiter Anschlussbereich ausgebildet ist, wobei in den beiden Anschlussbereichen jeweils die in dem inneren Wicklungsbereich und dem äußeren Wicklungsbereich vorhandene Biegespannung in Richtung auf den Übergangsbereich abnimmt. Vorzugsweise nimmt dabei die Biegespannung derart ab, dass im Übergangsbereich keine Biegespannung mehr vorliegt. Die Anschlussbereiche sind demzufolge Bereiche, die an den Übergangsbereich angrenzen und die im nicht montierten Zustand der Doppelschlingfeder eine andere Form aufweisen als im montierten Zustand der Doppelschlingfeder. Demzufolge sind diese Anschlussbereiche bei Montage der Doppelschlingfeder und der damit verbundenen radialen Verschiebung der beiden Wicklungsbereiche zueinander zu verformen. Die dabei in die Anschlussbereiche eingebrachten Biegespannungen sowie auch die durch die Durchmesserveränderung der Wicklungsbereiche eingebrachten Biegespannungen nehmen in den Anschlussbereichen in Richtung auf den Übergangsbereich ab, der vorzugsweise im nicht eingebauten Zustand der Doppelschlingfeder sowie möglichst auch im montierten Zustand der Doppelschlingfeder spannungsfrei vorliegt.

Die Anschlussbereiche können auch derart ausgestaltet sein, dass sie im nicht montierten Zustand der Doppelschlingfeder im Wesentlichen der Form und der Erstreckungsrichtung desjenigen Wicklungsbereiches, an den sie jeweils angeschlossen sind, folgen, und im montierten Zustand eine Abweichung von dieser Form ausbilden.

Durch die Erfindung wird außerdem ein zu aktuierendes System, insbesondere eine Kupplungseinrichtung, zur Verfügung gestellt, welches bzw. welche eine Betätigungseinrichtung mit einer erfindungsgemäßen Rotationseinrichtung umfasst, wobei die Betätigungseinrichtung dafür eingerichtet ist, eine rotatorische Bewegung der Rotationseinrichtung in eine translatorische Bewegung zwecks Betätigung eines Systems, insbesondere einer Kupplung, umzuwandeln. Die Betätigungseinrichtung kann hier insbesondere der erwähnte Planetenwälzgewindespindeltrieb sein. Eine erfindungsgemäße Kupplungseinrichtung umfasst selbstverständlich auch die Kupplung selbst. Demzufolge ist hier die erfindungsgemäße Rotationseinrichtung für die Betätigung eines Systems bzw. einer Kupplung eines Fahrzeuges ausgestaltet, wobei die Doppelschlingfeder in einem Aktor, wie zum Beispiel in einem Planetenwälzgewindespindeltrieb, genutzt wird.

Die Kupplungseinrichtung ist dazu eingerichtet, ein Drehmoment von einer Abtriebswelle auf einen Verbraucher und umgekehrt zu übertragen. Dies wird in der Regel über das Reibpaket erreicht, welches eine axial verschiebbare, in der Regel mit der Abtriebswelle rotationsfest verbundene, Anpressplatte aufweist, welche gegen zumindest eine korrespondierende Reibscheibe pressbar ist. Aus der Anpresskraft resultiert eine Reibkraft über die Reibfläche, welche multipliziert mit dem mittleren Radius der Reibfläche ein übertragbares Drehmoment ergibt.

Der Vorteil der erfindungsgemäßen Doppelschlingfeder liegt insbesondere in der erhöhten Steifigkeit des Übergangs zwischen dem inneren Wicklungsbereich und dem äußeren Wicklungsbereich, sodass ein von den Wicklungsbereichen übertragenes Drehmoment bei einer Drehrichtungsumkehr der Welle bzw. der Nabe effizient und in kürzester Weise übertragbar ist, sodass mit der Doppelschlingfeder in zuverlässiger Weise ein Haltemoment in einer mit der Doppelschlingfeder ausgestatteten Rotationseinrichtung erzeugbar ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maß eingeschränkt sind. Es ist dargestellt in
Figur 1: eine herkömmliche Doppelschlingfeder in perspektivische Ansicht,
Figur 2: eine herkömmliche Rotationseinrichtung mit Doppelschlingfeder in perspektivischer Ansicht,
Figur 3: eine herkömmliche Doppelschlingfeder im nicht montierten Zustand,
Figur 4: eine herkömmliche Doppelschlingfeder im montierten Zustand,
Figur 5: ein Drehmoment-Verdrehwinkel-Diagramm zu einer herkömmlichen Doppelschlingfeder,
Figur 6: einen Schnittverlauf durch eine erfindungsgemäße Doppelschlingfeder einer ersten Ausführungsform im nicht montierten Zustand im Übergangsbereich,
Figur 7: eine Schnittansicht durch eine erfindungsgemäße Doppelschlingfeder einer ersten Ausführungsform im montierten Zustand im Übergangsbereich,
Figur 8: eine Schnittansicht einer erfindungsgemäßen Doppelschlingfeder einer zweiten Ausführungsform im nicht montierten Zustand im Übergangsbereich,
Figur 9: eine Schnittansicht durch eine erfindungsgemäße Doppelschlingfeder einer zweiten Ausführungsform im montierten Zustand im Übergangsbereich,
Figur 10: eine Draufsicht auf eine erfindungsgemäße Doppelschlingfeder im nicht montierten Zustand,
Figur 11: eine Draufsicht auf eine erfindungsgemäße Doppelschlingfeder im montierten Zustand,
Figur 12: ein Drehmoment-Verdrehwinkel-Diagramm zu einer erfindungsgemäßen Doppelschlingfeder,
Figur 13: eine erfindungsgemäße Doppelschlingfeder in perspektivischer Ansicht im nicht eingebauten Zustand mit Zwischenring,
Figur 14: eine erfindungsgemäße Doppelschlingfeder im montierten Zustand mit Zwischenring,
Figur 15: einen perspektivischen Schnittverlauf durch eine erfindungsgemäße Doppelschlingfeder im nicht montierten Zustand,
Figur 16: einen Schnittverlauf durch eine erfindungsgemäße Doppelschlingfeder im nicht montierten Zustand mit Zwischenring,
Figur 17: einen Schnittverlauf durch eine erfindungsgemäße Doppelschlingfeder im montierten Zustand mit Zwischenring,
Figur 18: eine weitere Ausführungsvariante einer erfindungsgemäßen Doppelschlingfeder in perspektivischer Ansicht.

Zur Erläuterung einer herkömmlichen Doppelschlingfeder ist bereits auf die Figuren 1 bis 5 Bezug genommen worden.

In den Figuren 6 bis 9 sind zwei unterschiedliche Ausgestaltungen einer erfindungsgemäßen Doppelschlingfeder sowohl im nicht montierten Zustand (Figuren 6 und 8) als auch im montierten Zustand (Figuren 7 und 9) ersichtlich.

Wie in Figur 6 dargestellt ist, weist die hier gezeigte Ausführungsform der Doppelschlingfeder einen inneren Wicklungsbereich 21 und ein äußeren Wicklungsbereich 22 auf, die aufgrund einer Exzentrizität der Wicklungsbereiche 21, 22 im Bereich des Überganges zwischen den Wicklungsbereichen 21, 22 einen sehr geringen Abstand a zueinander haben. Der Übergangsbereich 23 zwischen dem inneren Wicklungsbereich 21 und dem äußeren Wicklungsbereich 22 ist hier sehr kurz ausgestaltet und hat einen entsprechend geringen Krümmungsradius Rk.

Figur 7 zeigt diese Ausführungsform der Doppelschlingfeder im eingebauten Zustand, wobei ersichtlich ist, dass der innere Wicklungsbereich 21 und äußere Wicklungsbereich 22 einen im Wesentlichen konstanten Abstand b zueinander an ihren Umfängen aufweisen. Dieser konstante Abstand b ergibt sich durch die beschriebene koaxiale Anordnung des inneren Wicklungsbereichs 21 und des äußeren Wicklungsbereichs 22 im eingebauten Zustand aufgrund der koaxialen Anordnung der Welle und der Nabe.

Figur 8 zeigt eine weitere Ausführungsform der erfindungsgemäßen Doppelschlingfeder, bei der ersichtlich ist, dass der Übergangsbereich 23 relativ lang ausgeführt ist, sodass auch der Krümmungsradius Rk des Übergangsbereichs 23 wesentlich größer ist als der Krümmungsradius Rk des Übergangsbereichs 23 in der in Figur 6 dargestellten Ausführungsform.

Auch hier ist, wie in Figur 9 dargestellt, der Abstand b zwischen dem inneren Wicklungsbereich 21 und dem äußeren Wicklungsbereich 22 entlang der Umfänge der Wicklungsbereiche 21, 22 konstant ausgeführt.

In beiden, in den Figuren 6 bis 9 dargestellten Ausführungsvarianten umfasst die Doppelschlingfeder an den Übergangsbereich 23 beidseitig angrenzend jeweils einen ersten Anschlussbereich 24 sowie einen zweiten Anschlussbereich 25, wobei der erste Anschlussbereich 24 zwischen dem inneren Wicklungsbereich 21 und dem Übergangsbereich 23 angeordnet ist und der zweite Anschlussbereich 25 zwischen dem äußeren Wicklungsbereich 22 und dem Übergangsbereich 23 angeordnet ist. Diese Anschlussbereiche 24, 25 sind die Bereiche, in denen eine durch die Verformung der Doppelschlingfeder im eingebauten Zustand vorliegende Biegespannung abnimmt, bis sie ein Minimum, vorzugsweise 0 erreicht hat. Der jeweilige Übergangsbereich 23 ist vorzugsweise auch im eingebauten Zustand der Doppelschlingfeder spannungsfrei. Des Weiteren sind die Anschlussbereiche 24, 25 die Bereiche, deren den jeweiligen Wicklungsbereichen 21, 22 zugewandte Randzonen noch der Kontur des jeweiligen Wicklungsbereiches 21, 22 folgen, im eingebauten Zustand der Doppelschlingfeder jedoch von dieser Kontur abweichen. Demzufolge existieren unterschiedliche Durchmesser des inneren Wicklungsbereichs 21 und des äußeren Wicklungsbereichs 22, nämlich der Durchmesser Dif des inneren Wicklungsbereichs im Fertigungszustand, der kleiner ist als der Durchmesser Die des inneren Wicklungsbereichs im eingebauten Zustand. Dementsprechend ist der Durchmesser Daf des äußeren Wicklungsbereichs im Fertigungszustand größer als der Durchmesser Dae des äußeren Wicklungsbereichs im eingebauten Zustand.

Durch die erfindungsgemäße, durch die Exzentrizität realisierte Ausgestaltung des Übergangsbereichs 23 der Doppelschlingfeder 20 wird erreicht, dass sich bei Drehmoment- bzw. Drehrichtungsumkehr der Übergangsbereich 23 nicht mehr derart elastisch verformen kann, wie es in herkömmlichen Ausgestaltungsformen von Doppelschlingfedern möglich ist.

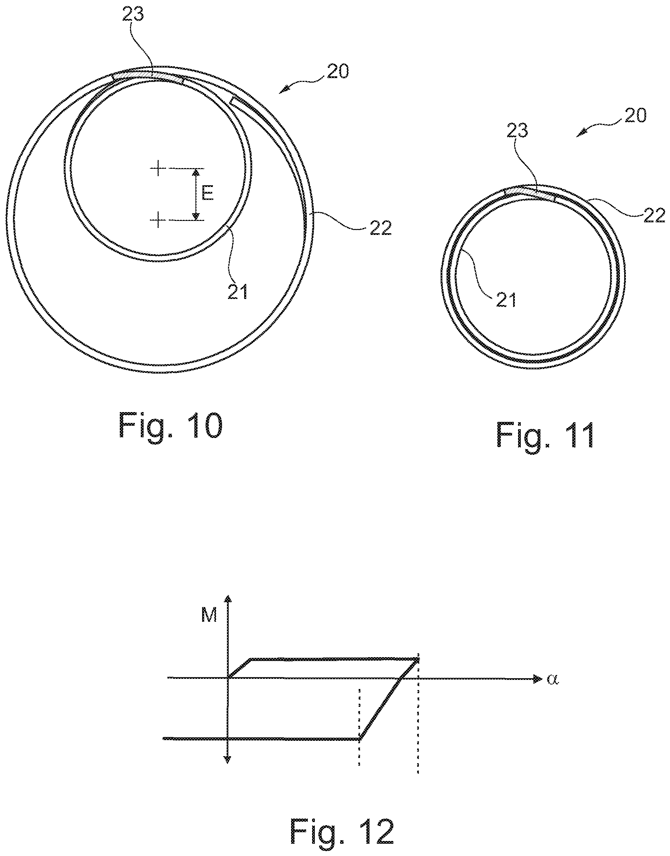

In den Figuren 10 und 11 ist deutlich der Unterschied in Form und Größe der erfindungsgemäßen Doppelschlingfeder im in Figur 10 dargestellten nicht eingebauten Zustand und im in Figur 11 im eingebauten Zustand ersichtlich. Deutlich ist in Figur 10 die Exzentrizität E erkennbar, die zwischen den Mittelpunkten des inneren Wicklungsbereichs 21 sowie des äußeren Wicklungsbereichs 22 besteht, um den sehr kurzen Übergangsbereich 23 zu realisieren.

Erkennbar ist weiterhin in Figur 11, dass der innere Wicklungsbereich 21 sowie der äußere Wicklungsbereich 22 im eingebauten Zustand koaxial zueinander angeordnet sind, wobei sich hier der Übergangsbereich 23 nur unwesentlich in seiner Form geändert hat.

Figur 12 zeigt ein Drehmoment-Verdrehwinkel-Diagramm einer erfindungsgemäßen Doppelschlingfeder, wobei ersichtlich ist, dass nach Drehrichtungsumkehr das Drehmoment wesentlich steiler ansteigt, welches mit der erfindungsgemäßen Doppelschlingfeder übertragbar ist.

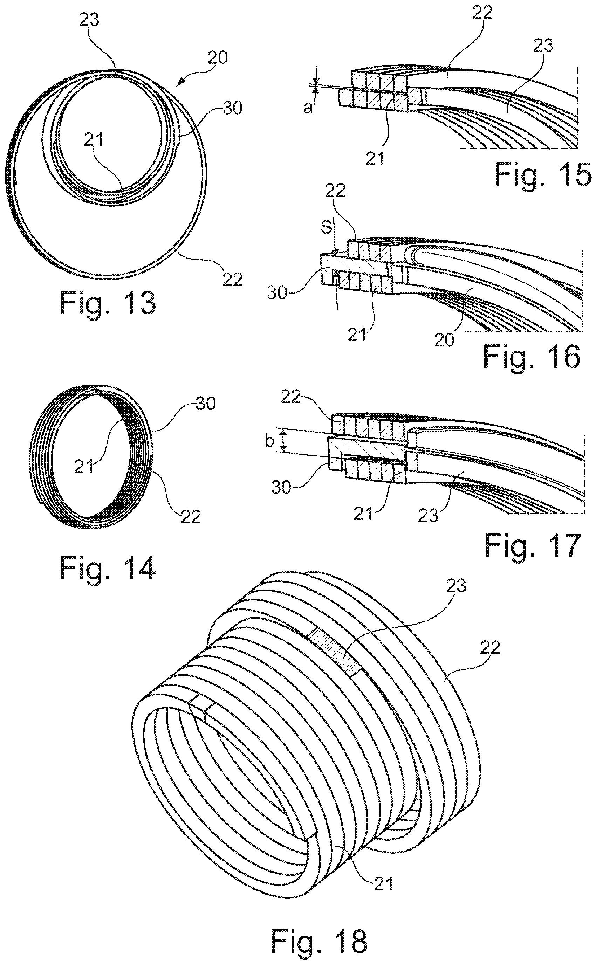

Die Figuren 13 bis 17 nehmen Bezug auf eine erfindungsgemäße Doppelschlingfeder mit angeordnetem Zwischenring 30. Figur 13 zeigt die Doppelschlingfeder 20 im nicht eingebauten Zustand mit integriertem Zwischenring 30, und Figur 14 zeigt die Doppelschlingfeder im eingebauten Zustand mit dem Zwischenring 30. Es ist ersichtlich, dass der Zwischenring 30 zwischen der Außenseite des inneren Wicklungsbereichs 21 und der Innenseite des äußeren Wicklungsbereichs 22 angeordnet ist.

Die Figuren 15 bis 17 beschreiben dabei einige Montagezustände der Doppelschlingfeder. Figur 15 zeigt in perspektivischer Schnittansicht die erfindungsgemäße Doppelschlingfeder noch ohne den Zwischenring, wobei hier deutlich der Abstand a zwischen dem inneren Wicklungsbereich 21 und äußeren Wicklungsbereich 22 im Bereich des Übergangs zwischen den Wicklungsbereichen 21, 22 erkennbar ist. In diesen Abstand a wird gemäß Figur 16 der Zwischenring 30 eingebracht, der eine Dicke S aufweist, die wenigstens so groß ist wie der Abstand a. Demzufolge liegt in dem hier dargestellten Bereich des Übergangs zwischen dem inneren Wicklungsbereich 21 und dem äußeren Wicklungsbereich 22 die Außenseite des inneren Wicklungsbereichs 21 an der Innenseite des Zwischenrings 30 an, und die Innenseite des äußeren Wicklungsbereichs 22 liegt an der Außenseite des Zwischenrings 30 an, so dass die Wicklungsbereiche den Zwischenring 30 zwischen sich fest klemmen.

Aufgrund der bereits beschriebenen koaxialen Anordnung des inneren Wicklungsbereichs 21 und des äußeren Wicklungsbereichs 22 im montierten Zustand ergibt sich die in Figur 17 dargestellte Situation, wo weiterhin der Zwischenring 30 zwischen dem inneren Wicklungsbereich 21 und dem äußeren Wicklungsbereich 22 angeordnet ist, jedoch nicht mehr zwingend mit Klemmkräften von den beiden Wicklungsbereichen 21, 22 radial beaufschlagt ist. Es ist ersichtlich, dass im montierten Zustand der Abstand b zwischen dem inneren Wicklungsbereich und dem äußeren Wicklungsbereich größer ist als die Dicke S des Zwischenringes.

Die Erfindung ist nicht auf eine radial verschachtelte Doppelschlingfeder mit ineinander angeordneten innerem Wicklungsbereich und äußerem Wicklungsbereich eingeschränkt, sondern sie bezieht sich auch auf einer Doppelschlingfeder mit axial aneinander angeschlossenen Wicklungsbereichen, die hier ebenfalls als innerer Wicklungsbereich 21 und äußerer Wicklungsbereich 22 bezeichnet sind, jedoch nicht in Bezug zueinander innen oder außen angeordnet sind. Eine solche Ausgestaltung der Doppelschlingfeder ist in Figur 18 gezeigt. Der innere Wicklungsbereich 21 weist einen geringeren Durchmesser auf als der äußere Wicklungsbereich 22. Beide Wicklungsbereiche 21, 22 sind durch den Übergangsbereich 23 mechanisch miteinander verbunden, der aufgrund der hier ebenfalls ersichtlichen Exzentrizität der Anordnung der Wicklungsbereiche 21, 22 ebenfalls sehr kurz und demzufolge steif ausführbar ist.

Mit der hier vorgeschlagenen Doppelschlingfeder lässt sich eine elastische Verformung eines Übergangsbereiches zwischen dem inneren Wicklungsbereich und dem äußeren Wicklungsbereich stark einschränken, so dass die in die Doppelschlingfeder eingetragene Energie als Torsionsmoment nicht von dem Übergangsbereich aufgenommen wird, sondern im Wesentlichen vollständig und sofort zur Bremsung bzw. Blockierung die Doppelschlingfeder kontaktierender Bauteile genutzt wird.

### Bezugszeichenliste

- 10: Rotationseinrichtung
- 11: Welle
- 12: Nabe
- 20: Doppelschlingfeder
- 21: innerer Wicklungsbereich
- TWi: Dicke des Wicklungsmaterials des inneren Wicklungsbereiches
- RiW: Radius des inneren Wicklungsbereiches
- Dif: Durchmesser des inneren Wicklungsbereiches im Fertigungszustand
- Die: Durchmesser des inneren Wicklungsbereiches im eingebauten Zustand
- 22: äußerer Wicklungsbereich
- Daf: Durchmesser des äußeren Wicklungsbereiches im Fertigungszustand
- Dae: Durchmesser des äußeren Wicklungsbereiches im eingebauten Zustand
- 23: Übergangsbereich
- Rk: Krümmungsradius
- a: Abstand zwischen dem inneren Wicklungsbereich und dem äußeren Wicklungsbereich
- b: Abstand zwischen dem inneren Wicklungsbereich und dem äußeren Wicklungsbereich
- E: Exzentrizität
- 24: erster Anschlussbereich
- 25: zweiter Anschlussbereich
- 26: Rotationsachse
- 30: Zwischenring
- S: Dicke des Zwischenringes
- M: Moment
- α: Verdrehwinkel
- 40: Stützeinrichtung

## Patentansprüche

1. Doppelschlingfeder (20) mit einem schraubengangförmigen inneren Wicklungsbereich (21) und einem schraubengangförmigen äußeren Wicklungsbereich (22), sowie mit einem den inneren Wicklungsbereich (21) mit dem äußeren Wicklungsbereich (22) mechanisch verbindenden Übergangsbereich (23), **dadurch gekennzeichnet, dass** im entspannten, nicht eingebauten Zustand der Doppelschlingfeder, die Wicklungsbereiche (21, 22) exzentrisch zueinander angeordnet sind.

2. Doppelschlingfeder nach Anspruch 1, **dadurch gekennzeichnet, dass** der Übergangsbereich (23) einen Krümmungsradius Rk aufweist, der mindestens so groß ist wie der Radius RiW des inneren Wicklungsbereiches(21).

3. Doppelschlingfeder nach Anspruch 1, **dadurch gekennzeichnet, dass** der Übergangsbereich (23) einen Krümmungsradius Rk aufweist, der maximal so groß ist wie 1/25 des Radius RiW des inneren Wicklungsbereiches (21).

4. Doppelschlingfeder nach einem der vorhergehenden Ansprüche, **dadurch gekennzeichnet, dass** der innere Wicklungsbereich (21) und der äußere Wicklungsbereich (22)
a) radial zumindest abschnittsweise einander überlagern, oder
b) axial aneinander angeschlossen sind.

5. Doppelschlingfeder nach einem der Ansprüche 2 bis 4, **dadurch gekennzeichnet, dass** die Doppelschlingfeder (20) einen zwischen dem inneren Wicklungsbereich (21) und dem äußeren Wicklungsbereich (22) angeordneten Zwischenring (30) umfasst, wobei der Zwischenring (30) eine Dicke S aufweist, die wenigstens so groß ist wie ein minimaler Abstand a des inneren Wicklungsbereiches (21) zum äußeren Wicklungsbereich (22), der in dem Sektor der Anordnung des Übergangsbereiches (23) besteht.

6. Rotationseinrichtung (10), umfassend eine Welle (11) und eine zumindest abschnittsweise als Hohlzylinder ausgestaltete Nabe (12) sowie zwischen Welle (11) und der Innenseite des Hohlzylinders der Nabe (12) eine Doppelschlingfeder (20) nach einem der Ansprüche 1 bis 5, wobei der schraubenförmige innere Wicklungsbereich (21) der Doppelschlingfeder (20) mit seiner Innenseite an einer Außenseite der Welle (11) anliegt, und der schraubenförmige äußere Wicklungsbereich (22) der Doppelschlingfeder (20) mit seiner Außenseite an einer Innenseite des Hohlzylinders der Nabe (12) anliegt, so dass beide Wicklungsbereiche (21, 22) zueinander konzentrisch angeordnet sind und bei einer Rotationsbewegung in einer ersten Drehrichtung der Nabe (12) in Bezug zur Welle (11) der äußere Wicklungsbereich (22) einen radialen Druck auf die Innenseite des Hohlzylinders der Nabe (12) vergrößert, so dass die Rotationsbewegung der Nabe (12) in Bezug zur Welle (11) gebremst oder blockiert wird, und bei Drehrichtungsumkehr in eine zweite Drehrichtung der Nabe (12) in Bezug zur Welle (11) der äußere Wicklungsbereich (22) einen radialen Druck auf die Innenseite des Hohlzylinders der Nabe (11) verringert, so dass die Rotationsbewegung der Nabe (12) in Bezug zur Welle (11) realisierbar ist.

7. Rotationseinrichtung nach Anspruch 6, **dadurch gekennzeichnet, dass** zwischen dem inneren Wicklungsbereich (21) und dem äußeren Wicklungsbereich (22) ein im Wesentlichen konstanter Abstand b besteht, wobei gilt: 0,1 TWi ≤ b ≤ 0,7 TWi, und TWi die Dicke des Wicklungsmaterials ist, aus dem der innere Wicklungsbereich (21) gefertigt ist.

8. Rotationseinrichtung nach einem der Ansprüche 6 und 7, **dadurch gekennzeichnet, dass** die Doppelschlingfeder (20) den Zwischenring (30) aufweist, wobei der innere Wicklungsbereich (21) mit seiner radial äußeren Seite radial beabstandet zu einer Innenseite des Zwischenringes (20) positioniert ist, und der äußere Wicklungsbereich (22) mit seiner radial inneren Seite radial beabstandet zu einer Außenseite des Zwischenringes (30) positioniert ist.

9. Rotationseinrichtung nach einem der Ansprüche 6 bis 8, **dadurch gekennzeichnet, dass** zwischen dem Übergangsbereich (23) und dem inneren Wicklungsbereich (21) ein erster Anschlussbereich (24) ausgebildet ist und zwischen dem Übergangsbereich (23) und dem äußeren Wicklungsbereich (22) ein zweiter Anschlussbereich (25) ausgebildet ist, wobei in den beiden Anschlussbereichen (24, 25) die in dem inneren Wicklungsbereich (21) bzw. dem äußeren Wicklungsbereich (22) vorhandene Biegespannung in Richtung auf den Übergangsbereich (23) abnimmt.

10. Zu aktuierendes System, insbesondere Kupplungseinrichtung, umfassend eine Betätigungseinrichtung mit einer Rotationseinrichtung (10) gemäß einem der Ansprüche 6 bis 9, wobei die Betätigungseinrichtung dafür eingerichtet ist, eine rotatorische Bewegung der Rotationseinrichtung (10) in eine translatorische Bewegung zwecks Betätigung einer Kupplung umzuwandeln.

11. Kupplungseinrichtung für ein Fahrzeug, umfassend einen Aktor zur Kupplungsbetätigung mit einer Rotationseinrichtung (10) nach Anspruch 6.

## Claims

1. A double wrap spring (20) having a helical inner winding region (21) and a helical outer winding region (22), as well as a transition region (23) mechanically connecting the inner winding region (21) to the outer winding region (22), **characterised in that**, in the relaxed, non-installed state of the double wrap spring, the winding regions (21, 22) are arranged eccentrically with respect to one another.

2. The double wrap spring according to claim 1, **characterised in that** the transition region (23) has a radius of curvature Rk which is at least as large as the radius RiW of the inner winding region (21).

3. The double wrap spring according to claim 1, **characterised in that** the transition region (23) has a radius of curvature Rk which is at most as large as 1/25 of the radius RiW of the inner winding region (21).

4. The double wrap spring according to one of the preceding claims, **characterised in that** the inner winding region (21) and the outer winding region (22)
a) superimpose one another radially at least in sections, or
b) are axially connected to one another.

5. The double wrap spring according to one of claims 2 to 4, **characterised in that** the double wrap spring (20) comprises an intermediate ring (30) arranged between the inner winding region (21) and the outer winding region (22), wherein the intermediate ring (30) has a thickness S which is at least as large as a minimum distance a of the inner winding region (21) to the outer winding region (22) which is located in the sector of the arrangement of the transition region (23).

6. A rotation device (10) comprising a shaft (11) and a hub (12) designed at least in sections as a hollow cylinder and a double wrap spring (20) according to one of claims 1 to 5 between the shaft (11) and the inside of the hollow cylinder of the hub (12), wherein the inner side of the helical inner winding region (21) of the double wrap spring (20) rests against an outer side of the shaft (11), and the outer side of the helical outer winding region (22) of the double wrap spring (20) rests against an inner side of the hollow cylinder of the hub (12) so that both winding regions (21, 22) are arranged concentrically with respect to one another and with a rotational movement in a first direction of rotation of the hub (12) in relation to the shaft (11), the outer winding region (22) exerts a radial pressure on the inside of the hollow cylinder of the hub (12) so that the rotational movement of the hub (12) is braked or blocked in relation to the shaft (11), and when the direction of rotation is reversed to a second direction of rotation of the hub (12) with respect to the shaft (11), the outer winding region (22) reduces a radial pressure on the inside of the hollow cylinder of the hub (11), so that the rotational movement of the hub (12) with respect to the shaft (11) can be realised.

7. The rotation device according to claim 6, **characterised in that** there is an essentially constant distance b between the inner winding region (21) and the outer winding region (22), wherein the following applies: 0.1 TWi < b < 0.7 TWi, and TWi is the thickness of the winding material from which the inner winding region (21) is made.

8. The rotation device according to one of claims 6 and 7, **characterised in that** the double wrap spring (20) has the intermediate ring (30), wherein the inner winding region (21) is positioned with its radially outer side at a radial distance from an inner side of the intermediate ring (20), and the outer winding region (22) is positioned with its radially inner side radially spaced apart from an outer side of the intermediate ring (30).

9. The rotation device according to one of claims 6 to 8, **characterised in that** a first connection region (24) is formed between the transition region (23) and the inner winding region (21) and a second connection region (25) is formed between the transition region (23) and the outer winding region (22), wherein in the two connection regions (24, 25) the bending stress present in the inner winding region (21) and the outer winding region (22) decreases in the direction of the transition region (23).

10. A system to be actuated, in particular a clutch device, comprising an actuation device with a rotation device (10) according to one of claims 6 to 9, wherein the actuation device is configured to convert a rotary movement of the rotation device (10) into a translational movement for the purpose of actuating a clutch.

11. A clutch device for a vehicle, comprising an actuator for clutch actuation with a rotation device (10) according to claim 6.

## Revendications

1. Double ressort enroulé (20) comprenant une zone d'enroulement interne (21) hélicoïdale et une zone d'enroulement externe (22) hélicoïdale, ainsi qu'une zone de transition (23) reliant mécaniquement la zone d'enroulement interne (21) à la zone d'enroulement externe (22), **caractérisé en ce que** dans l'état détendu et non installé du double ressort enroulé, les zones d'enroulement (21, 22) sont disposées de manière excentrique l'une par rapport à l'autre.

2. Double ressort enroulé selon la revendication 1, **caractérisé en ce que** la zone de transition (23) comporte un rayon de courbure Rk au moins aussi grand que le rayon RiW de la zone d'enroulement interne (21).

3. Double ressort enroulé selon la revendication 1, **caractérisé en ce que** la zone de transition (23) comporte un rayon de courbure Rk au maximum aussi grand que 1/25 du rayon RiW de la zone d'enroulement interne (21).

4. Double ressort enroulé selon l'une quelconque des revendications précédentes, **caractérisé en ce que** la zone d'enroulement interne (21) et la zone d'enroulement externe (22)
a) se superposent radialement au moins par sections ou
b) sont axialement reliées l'une à l'autre.

5. Double ressort enroulé selon l'une quelconque des revendications 2 à 4, **caractérisé en ce que** ledit double ressort enroulé (20) comprend une bague intermédiaire (30) disposée entre la zone d'enroulement interne (21) et la zone d'enroulement externe (22), dans lequel la bague intermédiaire (30) présente une épaisseur S au moins aussi grande qu'une distance minimale a de la zone d'enroulement interne (21) à la zone d'enroulement externe (22), laquelle existe dans le secteur de l'agencement de la zone de transition (23).

6. Dispositif de rotation (10), comprenant un arbre (11) et un moyeu (12) conçu au moins par sections sous la forme d'un cylindre creux, ainsi que, entre l'arbre (11) et le côté intérieur du cylindre creux du moyeu (12), un double ressort enroulé (20) selon l'une quelconque des revendications 1 à 5, dans lequel le côté intérieur de la zone d'enroulement interne (21) hélicoïdale du double ressort enroulé (20) repose contre un côté extérieur de l'arbre (11) et le côté extérieur de la zone d'enroulement externe (22) hélicoïdale du double ressort enroulé (20) repose contre un côté intérieur du cylindre creux du moyeu (12) de telle sorte que les deux zones d'enroulement (21, 22) sont disposées de manière concentrique l'une par rapport à l'autre et, lors d'un mouvement de rotation du moyeu (12) dans un premier sens de rotation par rapport à l'arbre (11), la zone d'enroulement externe (22) augmente une pression radiale sur le côté intérieur du cylindre creux du moyeu (12) de telle sorte que le mouvement de rotation du moyeu (12) est freiné ou bloqué par rapport à l'arbre (11) et, lors d'une inversion de sens de rotation dans un second sens de rotation du moyeu (12) par rapport à l'arbre (11), la zone d'enroulement externe (22) réduise une pression radiale sur le côté intérieur du cylindre creux du moyeu (11) de telle sorte que le mouvement de rotation du moyeu (12) par rapport à l'arbre (11) peut être réalisé.

7. Dispositif de rotation selon la revendication 6, **caractérisé en ce qu'**il existe une distance b essentiellement constante entre la zone d'enroulement interne (21) et la zone d'enroulement externe (22), dans lequel s'applique : 0,1 TWi < b < 0,7 TWi et TWi est l'épaisseur du matériau d'enroulement à partir duquel la partie d'enroulement interne (21) est fabriquée.

8. Dispositif de rotation selon l'une quelconque des revendications 6 et 7, **caractérisé en ce que** le double ressort enroulé (20) comporte la bague intermédiaire (30), dans lequel la zone d'enroulement interne (21) est positionnée avec son côté radialement extérieur à une distance radiale d'un côté intérieur de la bague intermédiaire (20) et la zone d'enroulement externe (22) est positionnée avec son côté radialement intérieur à une distance radiale d'un côté extérieur de la bague intermédiaire (30).

9. Dispositif de rotation selon l'une quelconque des revendications 6 à 8, **caractérisé en ce qu'**une première zone de liaison (24) est formée entre la zone de transition (23) et la zone d'enroulement interne (21) et une seconde zone de liaison (25) est formée entre la zone de transition (23) et la zone d'enroulement externe (22), dans lequel dans les deux zones de liaison (24, 25) la contrainte de flexion présente dans la zone d'enroulement interne (21) ou dans la zone d'enroulement externe (22) diminue en direction de la zone de transition (23).

10. Système destiné à être actionné, en particulier dispositif d'embrayage, comprenant un dispositif d'actionnement comportant un dispositif de rotation (10) selon l'une quelconque des revendications 6 à 9, dans lequel le dispositif d'actionnement est conçu pour convertir un mouvement de rotation du dispositif de rotation (10) en un mouvement de translation dans le but d'actionner un embrayage.

11. Dispositif d'embrayage pour un véhicule, comprenant un actionneur destiné à l'actionnement de l'embrayage comportant un dispositif de rotation (10) selon la revendication 6.
